# EUROPÄISCHE PATENTSCHRIFT

(11) **EP 0 399 081 B1**
(45) Veröffentlichungstag und Bekanntmachung des Hinweises auf die Patenterteilung: **27.10.1993**
(21) Anmeldenummer: 89109508.5
(22) Anmeldetag: 26.05.1989
(51) Int. Cl.: F16L 47/02

(54) **Schweissmuffe, mit einem thermoplastischen Materialanteil**
Electrofusion coupler having a content of thermoplastic material
Manchon d'électrofusion ayant une proportion de matière thermoplastique

(43) Veröffentlichungstag der Anmeldung: 28.11.1990
(73) Patentinhaber: Streng Plastic AG, CH-8155 Niederhasli (CH)
(72) Erfinder: Streng, Alfred, CH-8155 Niederhasli (CH)
(74) Vertreter: Blum, Rudolf Emil Ernst

(56) Entgegenhaltungen:
- EP-A- 0 173 174
- EP-A- 0 229 743
- CH-A- 664 530

## Beschreibung

Die Erfindung betrifft eine Schweissmuffe, mit einem thermoplastischen Materialanteil, mit zumindest einem innenliegenden elektrischen Heizleiter, der dazu bestimmt ist, Leitungen aus thermoplastischem Material durch Verschmelzen des thermoplastischen Materials von Muffe und Leitungen miteinander zu verbinden, und mit einer Einrichtung zum Anzeigen einer stattgefundenen Verschmelzung, wobei diese Einrichtung zumindest einen sich vom Heizleiter radial nach aussen weg erstreckenden Anzeigestift mit einer Abstützschulter sowie eine daran abgestützte Druckfeder umfasst, und wobei eine zweite Abstützstelle für die Druckfeder vorhanden ist, die radial weiter aussen liegt als die Abstützschulter, wobei der Anzeigestift mit dem schmelzenden thermoplastischen Materialanteil der Muffe in Verbindung steht, und mit einer an den Anzeigestift anschliessenden Ausnehmung im thermoplastischen Muffen-Materialanteil.

Durch die EP-A-0 173 174 ist eine solche vorerwähnte Schweissmuffe bekannt. Bei dieser bekannten Schweissmuffe (und auch bei anderen gemäss CH-PS 553 368, 601 719, 632 078, DE-PS 40 18 396 und EP-B-0 257 283) hat der Schmelzdruck zur Folge, dass das geschmolzene thermoplastische Material der Muffe nach aussen drängt und ein Anzeigestift sichtbar wird. An einem solchen sichtbaren Anzeigestift ist dann also zu erkennen, ob ein Verschweissen, d.h. Verschmelzen zwischen Muffe und den Leitungen stattgefunden hat. Beim Schmelzvorgang beginnt die Schmelze abzufliessen (zum Sichtbarmachen des Anzeigestiftes); hierbei werden die Heizleiter in Flussrichtung mitbewegt und ergeben an der Abflussstelle bei der Ausnehmung eine Annäherung der Heizleiterwindungen aneinander und damit eine Konzentration der Heizleistung, die einen verstärkten Abfluss zur Folge hat. Dies bedeutet, dass an der von der Abflussstelle am weitesten weg liegenden Stelle eine am wenigsten intensive Verschmelzung durch verminderte Heizleistung stattfindet, d.h. die Verschmelzung wird graduell verschlechtert, je weiter sie von der Abflussstelle weg stattfindet. Wünschbar ist aber eine gleichmässige Verteilung der Heizleistung, was einen gleichbleibenden Windungsabstand der Heizleiterwindungen voraussetzt. Weiterhin ist die Gefahr einer Lunkerbildung an der erwähnten Abflussstelle am grössten, da hier die Dünnflüssigkeit der Schmelze am grössten ist und dadurch beim Erkalten auch die grösste Schwindung eintritt. Im Bereich der erwähnten Abflussstelle kann somit eine Leckage nach aussen auftreten, da natürlich der Draht des Heizleiters mit dem umgebenden thermoplastischen Material keine Verschmelzung eingeht und beim erwähnten grossen Schwinden des thermoplastischen Materials eine Kanalbildung längs des Drahtes vom Heizleiter eintreten kann, was einen Gasaustritt bei Gasleitungen zur Folge haben kann.

Es wird die Schaffung einer verbesserten Schweissmuffe bezweckt, mit der die vorerwähnten Nachteile vermieden werden können.

Die erfindungsgemässe Schweissmuffe ist dadurch gekennzeichnet, dass die Kraft der Druckfeder so genügend gross bemessen ist, dass beim Inschmelzegehen des mit dem Anzeigestift in Verbindung stehenden Muffen-Materialanteils dieser Materialanteil durch die Federkraft der Druckfeder in die Ausnehmung verdrängt wird und somit der bei einer nicht stattgefundenen Verschmelzung sich in einer ausgefahrenen Stellung befindliche Anzeigestift bei stattgefundener Verschmelzung sich in einer radial eingefahrenen Stellung befindet. Durch diese erfindungsgemässe Massnahme erfolgt mittels der Druckfeder ein "Nachfüttern" der Schmelze von aussen her, so dass die Schmelze die Ausnehmung auszufüllen beginnt und der vorher sichtbare Anzeigestift bei erfolgter Verschweissung radial eingefahren und z.B. unsichtbar geworden ist. Durch dieses "Nachfüttern" der Schmelze erfolgt eine Krafteinwirkung auf die Schmelze radial von aussen nach innen, und die Windungen des Heizleiters bleiben an ihrer ursprünglich Stelle, so dass der Gefahr der Lunkerbildung entgegengewirkt wird. Um das Vorstehende zu erreichen, muss die radiale Kraft der Druckfeder genügend gross sein und zwar grösser als die radiale Kraft der Schmelze nach aussen.

Im folgenden werden zwei Ausführungsbeispiele des Erfindungsgegenstandes dargestellt. Es zeigen:
Figur 1 einen Längsschnitt durch einen Teil der Schweissmuffe und der radial innenliegenden Leitungen, und
Figur 2 einen Ausschnitt aus Figur 1 bei einer anderen Ausführungsform des Anzeigezapfens.

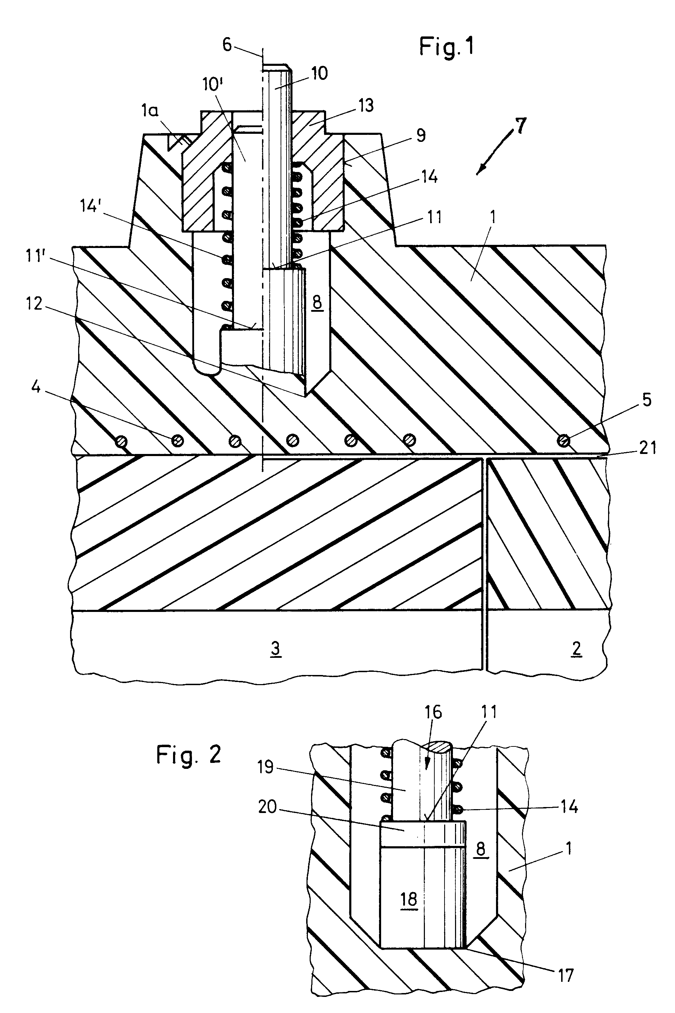

Die Schweissmuffe hat einen thermoplastischen Materialanteil 1, der in den Figuren 1 und 2 mit einer Kunststoff-Schraffur gezeigt ist. Die Schweissmuffe dient zum Verbinden von zwei radial innenliegenden Leitungen 2 und 3, die ebenfalls aus einem thermoplastischen Material bestehen. Die Schweissmuffe hat zumindest einen, im gezeigten Beispiel aber zwei radial innenliegende elektrische Heizleiter 4 und 5, die dazu bestimmt sind, die Leitungen 2 und 3 durch Verschmelzen des thermoplastischen Materials 1 von Muffe und Leitungen 2,3 miteinander zu verbinden. In Figur 1 sind rechts von einer Mittellinie 6 die Teile von Muffe 7 und Leitungen 2,3 vor dem Verschweissen dargestellt; links von der Linie 6 sind diese Bauteile nach dem Verschweissen dargestellt.

Im thermoplastischen Material 1 der Schweissmuffe 7 befindet sich eine z.B. zylindrische Ausnehmung 8 sowie eine im Durchmesser vergrösserte Bohrung 9. Im Zentrum (Achse 6) der Ausnehmung 8 liegt ein Anzeigezapfen 10, der einstückig ist mit dem thermoplastischen Material 1 der Muffe 7. Der Anzeigezapfen 10 hat eine Abstützschulter 11 und geht an seinem unteren Ende 12 in Figur 1 in das thermoplastische Material 1 über. Im thermoplastischen Material 1 der Muffe 7 sitzt eine Büchse 13 in der Bohrung 9 und wird nach dem achsialen Einsetzen in diese Bohrung 9 durch ein plastisches Verformen mittels eines Lappens 1a befestigt, wie in Figur 1 links von der Achse 6 gezeigt ist. Der Lappen 1a ist also Teil des thermoplastischen Materials 1. Zwischen der Abstützschulter 11 und der Büchse 13 liegt eine Druckfeder 14. Die Büchse 13 dient also als zweite Abstützstelle für die Druckfeder 14, wobei diese zweite Abstützstelle radial weiter aussen liegt als die Abstützschulter 11.

In Figur 1 ist nur ein Anzeigezapfen 10 dargestellt; in der Praxis wird man aber weiter rechts davon einen zweiten, ebensolchen Anzeigezapfen 10 vorsehen, um anzuzeigen, dass auch eine Verschmelzung des thermoplastischen Materials mit der Leitung 2 stattgefunden hat. Gemäss Figur 1 kann man sagen, dass der zumindest eine Anzeigezapfen 10 der Schweissmuffe 7 radial ausserhalb des Heizleiters 4 liegt und sich vom Heizleiter 4 radial weg erstreckt.

Aus Figur 1 ist weiterhin ersichtlich, dass die Abstützschulter 11 vom Heizleiter 4 abgewandt liegt. Aus Figur 1 ist weiterhin ersichtlich, dass das untere Ende 12 der Ausnehmung 8 radial innerhalb der Abstützschulter 11 liegt.

Die Büchse 13 kann aus einem anderen Material als der thermoplastische Teil 1 der Muffe 7 sein und weiterhin kann die Farbe der Büchse 13 ebenfalls anders sein als die des thermoplastischen Materials 1. Die Bauteile oder Ausbildungen 8 bis 14 bilden zusammen eine Einrichtung zum Anzeigen einer stattgefundenen Verschmelzung zwischen den thermoplastischen Teilen 1, 2 und 3. Der Anzeigezapfen 10 ist hierbei die massgebende Markierung und er wird deshalb in einer besonders ins Auge fallenden Farbe hergestellt. Da in der Praxis das thermoplastische Material 1 der Muffe oft schwarz ist, kann der Anzeigezapfen 10 z.B. eine gelbe oder rote Farbe haben; wobei auch der nach aussen sichtbare Teil der Büchse 13 eine andere Farbe haben kann wie das thermoplastische Material 1.

Beim anderen Ausführungsbeispiel des Anzeigezapfens nach Figur 2 ist der Anzeigezapfen 16 nunmehr als gesonderter Bauteil ausgebildet, also nicht mehr einstückig mit dem thermoplastischen Material 1. Dieser Anzeigezapfen 16 ist dann in der Ausnehmung 8 eingelegt und liegt am Grund 17 der Ausnehmung 8 an. Der Anzeigezapfen 16 hat wiederum die Abstützschulter 11 für die Druckfeder 14. Der Anzeigezapfen 16 kann insgesamt, wie beim Beispiel nach Figur 1, aus dem gleichen thermoplastischen Material 1 der Muffe bestehen. Es ist aber auch möglich, wie in Figur 2 gezeigt, dass nur das radial innerste Ende 18 des Anzeigezapfens 16 aus einem Thermoplast besteht, wobei die anderen Teile 19 und 20 aus einem anderen Material bestehen können. Man kann also sagen, dass gemäss Figur 2 der Anzeigezapfen 16 in seiner Längenerstreckung aus zumindest zwei Abschnitten aus unterschiedlichen Materialien zusammengesetzt ist.

Bei einem anderen, nicht dargestellten Ausführungsbeispiel könnte auf die in Figur 1 gezeigte Büchse 13 verzichtet werden, wobei dann auch nicht die Bohrung 9 hierfür gefertigt werden muss. Bei einer solchen Ausführungsform könnte dann die zweite Abstützstelle für die Druckfeder 14 direkt am thermoplastischen Material 1 vorhanden sein. Der obere Mündungsrand der Ausnehmung 8 würde dann als zweite Abstützstelle dienen, wobei das Material 1 am erwähnten Mündungsrand, ähnlich wie der Lappen 1a in die Ausnehmung 8 hineinragen würde.

Die Arbeitsweise mit der erläuterten Schweissmuffe geht folgendermassen vor sich:

Zum Verbinden der beiden Leitungen 2 und 3 werden deren Leitungsenden in die Schweissmuffe 7 eingeschoben, wobei ein herstellungsbedingtes Spiel 21 zwischen Muffe 7 und den Leitungen 2 und 3 vorhanden ist. Es soll im folgenden nur die Verschmelzung mittels des Heizleiters 4, also die Verschmelzung zwischen Muffe 7 und Leitung 3 erläutert werden. Der Anzeigezapfen 10 ragt gemäss Figur 1, rechte Hälfte, über die Büchse 13 und zeigt somit an, dass noch keine Verschweissung stattgefunden hat. Wird nunmehr an den Heizleiter 4 eine Spannung angelegt, so wird das den Heizleiter 4 umgebende thermoplastische Material 1 von Muffe 7 und Leitung 3 geschmolzen, wobei die Schmelze das Spiel 21 zwischen Muffe 7 und Leitung 3 ausfüllt. Dieses geschmolzene Material stammt vom unteren Ende des Anzeigezapfens 10, wobei dieses unten in Schmelze übergehende Material durch die Druckfeder 14 über die Abstützschulter 11 nach unten gedrückt wird. Dieser radial nach innen gerichteten Kraft durch die Druckfeder 14 wirkt der Druck der Gase entgegen, die beim Schmelzvorgang in der Schmelze entstehen. Der unten abschmelzende Anzeigezapfen füllt neben dem Spiel 21 auch noch den unteren Bereich der Ausnehmung 8 aus, wie in Figur 1 links der Achse 6 gezeigt ist. Die Druckfeder 14 wirkt also dem nach aussen gerichteten Druck der Schmelze entgegen. Nach vollständig durchgeführter Verschweissung, also Verschmelzung des thermoplastischen Materials 1 von Muffe 7 und Leitung 3 ist der Anzeigezapfen 10 am unteren Bereich so weit abgeschmolzen, dass seine Abstützschulter nunmehr die Stellung 11′ eingenommen hat. Die Druckfeder hat hierbei die Stellung 14′ eingenommen. Der noch verbleibende Anzeigezapfen hat die Stellung 10′ angenommen, wobei er sich innerhalb der Büchse 13 zurückgezogen hat, und somit von aussen nicht mehr sichtbar ist. Hierdurch wird angezeigt, dass die gewünschte Verschweissung (Verschmelzung) stattgefunden hat. Wie bereits erwähnt, wird bezüglich des Heizleiters 5 ein ebensolcher Anzeigezapfen vorgesehen, der in Figur 1 nicht dargestellt ist. Sind nunmehr beide Anzeigezapfen 10 nicht mehr sichtbar, so kann optisch mit einem Blick festgestellt werden, dass die Schweissmuffe 7 einwandfrei auf den beiden Leitungen 2 und 3 verschweisst worden ist.

Der vorerwähnte Schmelzvorgang am unteren Ende des Anzeigezapfens findet bei der Ausbildung des Anzeigezapfens 16 nach Figur 2 in gleicher Weise statt, wobei also das thermoplastische Material 18 des Anzeigezapfens 16 in Schmelze geht, das in Figur 1 gezeigte Spiel 21 ausfüllt und auch noch den unteren Bereich der Ausnehmung 8 anfüllt, wobei diese Schmelze durch den Druck der Feder 14 radial nach innen gedrückt wird, so dass auch hierdurch Lunker im thermoplastischen, geschmolzenen Material verhindert werden.

Bei einem weiteren nicht dargestellten Ausführungsbeispiel könnte der Heizleiter 4 bzw. 5 auch als Kreiszylinder ausgebildet sein, der in einen äusseren thermoplastischen Mantel des Muffenmaterials 1 achsial eingesetzt ist. In diesem Fall würden die Windungen des Heizleiters 4 bzw. 5 also nicht mehr im Muffenmaterial 1 eingebettet liegen, sowie es in Figur 1 dargestellt ist, sondern der Heizleiter würde als gesonderter Bauteil (Kreiszylinder) vorliegen, der vor dem Schweissvorgang ins Innere des Muffenmaterials 1 eingesetzt wird. Ein solcher Kreiszylinder liegt dann nach dem Schweissvorgang in der gleichen dargestellten Weise nach Figur 1 eingebettet im thermoplastischen Material 1 von Muffe 7 und Leitung 3 bzw. 2.

## Patentansprüche

1. Schweissmuffe, mit einem thermoplastischen Materialanteil (1), mit zumindest einem innenliegenden elektrischen Heizleiter (4, 5), der dazu bestimmt ist, Leitungen (3, 2) aus thermoplastischem Material durch Verschmelzen des thermoplastischen Materials (1) von Muffe und Leitungen (3, 2) miteinander zu verbinden, und mit einer Einrichtung (8-14) zum Anzeigen einer stattgefundenen Verschmelzung, wobei diese Einrichtung zumindest einen sich vom Heizleiter (4, 5) radial nach aussen weg erstreckenden Anzeigestift (10, 16) mit einer Abstützschulter (11) sowie eine daran abgestützte Druckfeder (14) umfasst, und wobei eine zweite Abstützstelle (13) für die Druckfeder (14) vorhanden ist, die radial weiter aussen liegt als die Abstützschulter (11), wobei der Anzeigestift (10, 16) mit dem schmelzenden thermoplastischen Materialanteil (1) der Muffe in Verbindung steht, und mit einer an den Anzeigestift (10, 16) anschliessenden Ausnehmung (8) im thermoplastischen Muffen-Materialanteil (1), dadurch gekennzeichnet, dass die Kraft der Druckfeder (14) so genügend gross bemessen ist, dass beim Inschmelzegehen des mit dem Anzeigestift (10, 16) in Verbindung stehenden Muffen-Materialanteils (1) dieser Materialanteil (1) durch die Federkraft der Druckfeder (14) in die Ausnehmung (8) verdrängt wird und somit der bei einer nicht stattgefundenen Verschmelzung sich in einer ausgefahrenen Stellung befindliche Anzeigestift bei stattgefundener Verschmelzung sich in einer radial eingefahrenen Stellung befindet.

2. Schweissmuffe nach Anspruch 1, wobei der Anzeigestift (10) einstückig mit dem thermoplastischen Muffen-Materialanteil (1) ist, dadurch gekennzeichnet, dass der Anzeigestift (10) bei nicht stattgefundener Verschmelzung den übrigen Teil (1, 13) der Muffe radial überragt und damit sichtbar ist, und bei stattgefundener Verschmelzung der Anzeigestift (10) in den übrigen Teil (1, 13) der Muffe unsichtbar radial eingefahren ist.

3. Schweissmuffe nach Anspruch 1, wobei der Anzeigestift (16) als vom thermoplastischen Muffen-Materialanteil (1) abgesonderter Einzelteil vorliegt, der in der Ausnehmung (8) eingelegt ist, dadurch gekennzeichnet, dass zumindest das radial innerste Ende (18) des Anzeigestiftes (16) aus einem Thermoplast besteht (Fig. 2).

4. Schweissmuffe nach Anspruch 3, dadurch gekennzeichnet, dass der Anzeigestift (16) in seiner Längenerstreckung aus zumindest zwei Abschnitten (18-20) aus unterschiedlichen Materialien zusammengesetzt ist.

5. Schweissmuffe nach Anspruch 1, gekennzeichnet durch eine als gesonderter Bauteil vorliegende Büchse (13), die die zweite Abstützstelle für die Druckfeder (14) aufweist.

6. Schweissmuffe nach Anspruch 5, dadurch gekennzeichnet, dass die Büchse (13) aus einem anderen Material ist, als der thermoplastische Muffen-Materialanteil (1).

## Claims

1. Welding sleeve having a thermoplastic material portion (1), with at least one internal electrical heating element (4, 5) which is designed to join pipes (3, 2) of thermoplastic material together by fusion of the thermoplastic material (1) of sleeve and pipes (3, 2), and with a device (8-14) for indicating that fusion has taken place, wherein this device includes at least one indicator pin (10, 16) extending radially outwards away from the heating element (4, 5) with a supporting shoulder (11), as well as a compression spring (14) supported thereon, and wherein there is a second supporting point (13) for the compression spring (14) which is radially further outwards than the supporting shoulder (11), wherein the indicator pin (10, 16) is connected to the melting thermoplastic material portion (1) of the sleeve, and with a recess (8) adjoining the indicator pin (10, 16) in the thermoplastic sleeve material portion (1), characterised in that the force of the compression spring (14) is so great that, on melting of the sleeve material portion (1) connected to the indicator pin (10, 16), this material portion (1) is displaced by the force of the compression spring (14) into the recess (8), and hence the indicator pin, which is in an extended position when fusion has not taken place, is in a radially retracted position when fusion has taken place.

2. Welding sleeve according to claim 1, wherein the indicator pin (10) is integral with the thermoplastic sleeve material portion (1), characterised in that the indicator pin (10) when fusion has not taken place protrudes radially beyond the remainder (1, 13) of the sleeve and is therefore visible, and when fusion has taken place the indicator pin (10) is radially retracted into the remainder (1, 13) of the sleeve invisibly.

3. Welding sleeve according to claim 1, wherein the indicator pin (16) is present as a component part which is separate from the thermoplastic sleeve material portion (1) and which is inserted in the recess (8), characterised in that at least the radially innermost end (18) of the indicator pin (16) is made of a thermoplastic material (Fig. 2).

4. Welding sleeve according to claim 3, characterised in that the indicator pin (16) in its length is composed of two or more sections (18-20) made of different materials.

5. Welding sleeve according to claim 1, characterised by a bush (13) which is present as a separate component and which comprises the second supporting point for the compression spring (14).

6. Welding sleeve according to claim 5, characterised in that the bush (13) is made of a different material to the thermoplastic sleeve material portion (1).

## Revendications

1. Manchon de soudage comportant une portion de matière thermoplastique (1), comportant au moins un conducteur chauffant électrique (4,5), situé à l'intérieur et destiné à relier l'une à l'autre des conduites (3,4) en matière thermoplastique par fusion de la matière thermoplastique (1) du manchon et des conduite (3,2), et un dispositif (8 à 14) pour l'indication d'une fusion qui a eu lieu, ce dispositif comportent au moins une tige d'indication (10,16), qui s'étend radialement vers l'extérieur à l'écart du conducteur chauffant et qui comporte un épaulement d'appui (11), ainsi qu'un ressort de compression (14) appuyé là dessus, un second endroit d'appui (13) qui est situé radialement plus loin vers l'extérieur que l'épaulement d'appui (11) étant disponible pour le ressort de compression (14), la tige d'indication (10,16) étant en liaison avec la portion de matière thermoplastique (1) qui fond du manchon, et comportant un évidement (8), contigu à la tige d'indication (10,16), dans la portion de matière thermoplastique du manchon (1), caractérisé en ce que la force du ressort de compression (14) est dimensionnée de façon suffisamment grande pour que, lors du début de la fusion de le portion de matière de manchon (1) qui est en liaison avec la tige d'indication (10,16), cette portion de matière (1) est déplacée dans l'évidement (8) par la force du ressort de compression (14) et pour qu'ainsi la tige d'indication, qui se trouve dans une position sortie lorsqu'une fusion n'a pas eu lieu, se trouve dans une position radialement rentrée lorsqu'une fusion a eu lieu.

2. Manchon de soudage suivant la revendication 1, dans lequel la tige d'indication (10) est formée d'une pièce avec la portion de matière thermoplastique (1) du manchon, caractérisé en ce que le tige d'indication (10) fait radialement saillie de la partie restante (1,13) du manchon, et est ainsi visible, lorsqu'une fusion n'a pas eu lieu et, lorsqu'une fusion a eu lieu, la tige d'indication (10) est radialement rentrée de façon non visible dans la partie restante (1,13) du manchon.

3. Manchon de soudage suivant la revendication 1, dans lequel la tige d'indication (16) est sous forme d'une partie constitutive qui est séparée de la portion de matière thermoplastique (1) du manchon et qui est insérée dans l'évidement (8), caractérisée en ce qu'au moins l'extrémité radialement la plus interne (18) de la tige d'indication (16) est constituée d'une matière thermoplastique (figure 2).

4. Manchon de soudage suivant la revendication 3, caractérisé en ce que la tige d'indication (16) est composée dans sa longueur d'au moins deux tronçons (18 à 20) de matières différentes.

5. Manchon de soudage suivant la revendication 1, caractérisé par une douille (13) qui est présente sous la forme d'un élément constitutif séparé et qui présente le second endroit d'appui pour le ressort de compression (14).

6. Manchon de soudage suivant la revendication 5, caractérisé en ce que la douille (13) est constituée d'une autre matière que la portion de matière thermoplastique (1) du manchon.
